# EUROPEAN PATENT APPLICATION

(11) **EP 0 923 227 A2**
(43) Date of publication of application: **16.06.1999**
(21) Application number: 98310085.0
(22) Date of filing: 09.12.1998
(51) Int. Cl.: H04N 1/327

(54) **Mechanism to facilitate single-number for voice and non-voice calls**

(30) Priority: 10.12.1997 US 988085
(71) Applicant: NORTHERN TELECOM LIMITED, Montreal, Quebec H2Y 3Y4 (CA)
(72) Inventor: Brennan, Paul Michael, East York, Ontario M4G 2G1 (CA)
(74) Representative: Humphrey-Evans, Edward John

(57) **Abstract**

To accommodate calls to a destination number which may be either voice calls or a facsimile call, an answering apparatus receives the call when it is unanswered by a telephone and provides voice mail services. If while handling the call as a voice call a facsimile calling tone is received, the answering apparatus switches to facsimile call handling. If the call is answered by the telephone, the answering apparatus is conferenced in and initiates facsimile call handling if a facsimile calling tone is received. The answering apparatus may be configured to handle other non-voice calls in addition to, or in place of, facsimile calls, such as TTY/TDD calls.

## Description

### BACKGROUND OF THE INVENTION

This invention relates to a method and apparatus for handling both voice and non-voice calls on a call path.

Often, a person or organization has one destination number (DN) for voice calls and a second DN for facsimile calls. Where, however, it is preferred to have all calls handled by one DN, provision must be made to accommodate both types of call. In this regard, it is known to provide apparatus which will "pre-answer" each call to the DN and provide a simulated ring-back or voice prompt to the caller. If the apparatus then detects a facsimile calling tone (known as a "CNG"), it routes the call as a facsimile call; otherwise, it routes the call as a voice call. A drawback with such an approach is that a voice prompt to the caller may result in an immediate hang-up on the caller making the assumption they have reached voice messaging. And if the call is pre-answered with a ring-back signal (which is detectable by the caller due to the break in the cadence of the ring tone), the ring-back signal may be interpreted by the caller as forwarding to voice mail, which may also result in a hang-up. Further, a ring-back signal after answering is not allowed in some jurisdictions. Similar problems would arise if it were attempted to provide one DN for voice and teletype (TTY) communications for the deaf.

This invention seeks to overcome drawbacks of known systems for handling voice and non-voice calls to a single DN.

### SUMMARY OF THE INVENTION

According to the present invention, there is provided a method for handling both voice and non-voice calls on a call path, comprising the steps of: sensing whether or not a telephone associated with said call path has completed a call on said call path; when sensing that said call has not been completed by said associated telephone,
(i) completing said call and initiating the playing of a greeting on said call path;
(ii) monitoring said call path for a non-voice indicator signal;
(iii) on sensing a non-voice indicator signal, initiating handling of said call as a non-voice call and, if said greeting is playing, initiating cessation of said greeting;
(iv) on failing to sense said non-voice indictor signal before the end of said greeting, initiating voice mail handling of said call until any said non-voice indicator signal is received;
when sensing that said call on said call path has been completed by said associated telephone,
(i) monitoring said call path for a non-voice indicator signal; and
(ii) on sensing a non-voice indicator signal, initiating the handling of said call on said call path as a non-voice call.

According to another aspect, there is provided a voice and non-voice answering apparatus for a call path, comprising: a port for association with said call path and having an on-hook state and an off-hook state; processing means for receiving an indication a call on said call path has not been completed by a telephone associated with said call path within a pre-determined time and thereafter:
(i) transitioning said port to said off-hook state;
(ii) initiating the playing of a greeting over said port;
(iii) monitoring for a non-voice indicator signal received by said port on said call path;
(iv) on sensing a non-voice indicator signal, initiating handling of a call on said call path as a non-voice call, and, if said greeting is playing, initiating cessation of said greeting;
(v) on failing to sense said non-voice indictor signal before the end of said greeting, initiating voice mail handling of said call until any said non-voice indicator signal is received;
and for receiving an indication said call on said call path has been completed by said associated telephone and thereafter:
(i) transitioning said port to said off-hook state;
(ii) monitoring for a non-voice indicator signal received by said port; and
(iii) on sensing a non-voice indicator signal, initiating the handling of said call on said call path as a non-voice call.

### BRIEF DESCRIPTION OF THE DRAWINGS

In the figures which disclose example embodiments of the invention,
figure 1 illustrates a system made in accordance with one embodiment of this invention, and
figure 2 illustrates a system made in accordance with another embodiment of this invention.

### DESCRIPTION OF THE PREFERRED EMBODIMENTS

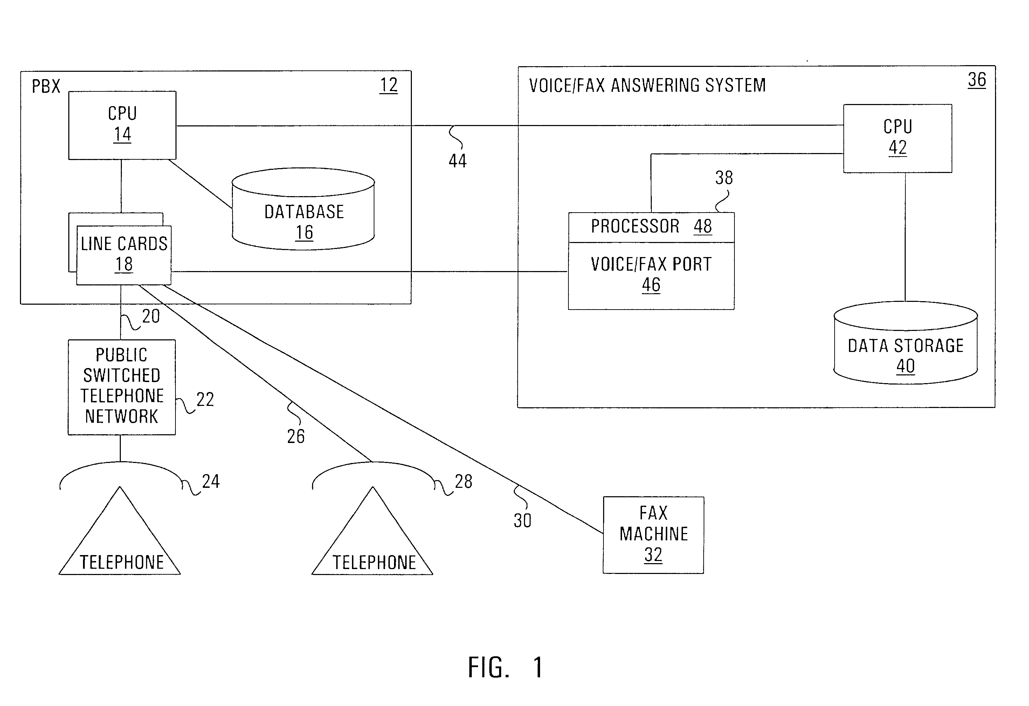

With reference to figure 1, a system for handling both voice and facsimile calls comprises a private branch exchange (PBX) 12 having a central processing unit (CPU) 14, a database 16, and a plurality of line cards 18. The line cards connect the PBX to external devices: one line card is connected by line 20 to the public switched telephone network (PSTN) 22 which services a remote telephone 24; another line card is connected by line 26 to a local telephone 28; a further line card is connected by line 30 to a local facsimile machine 32; and another line card is connected by line 34 to a local voice/fax answering apparatus 36.

The voice/fax answering apparatus 36 comprises a digital signal processor (DSP) 38, a data store 40, and a CPU 42 which is operatively connected to each of the DSP 38 and data store 40. CPU 42 is also connected for communication with the CPU 14 of the PBX 12 by communication line 44. The DSP 38 comprises a voice/fax port 46, which terminates line 34, and a processor 48.

In operation, assuming the PBX is equipped for direct-inward-dialling, if a caller from telephone 24 dials a DN associated with a local telephone of PBX 12, the PSTN 22 routes the call to line 20 to the PBX. The line card terminating line 20 sends the DN to the CPU 14 of the PBX. The PBX accesses database 16 to determine which line card is represented by the DN. If the line card represented by the DN is not busy, the PBX next bridges the line card terminating line 20 with the line card representing the DN, say the line card terminating line 26, in order to establish a call path from the calling telephone 24 to local telephone 28. If the line card terminating line 26 is busy, or the telephone 28 remains unanswered after a pre-determined number of rings, the PBX CPU 14 re-routes the call to the line card terminating line 34 of the answering apparatus 36 and signals the answering apparatus CPU 42 on communication line 44 with the DN along with an indication as to whether the telephone 28 was busy or unanswered and any information received on line 20 identifying the calling party, such as the calling party's number -- known as "calling line ID", or CLID -- or the calling party's name -- known as "calling party name display", or CPND. The "busy" or "not answered" indication allows the CPU 42 to sense that the call has not been completed by telephone 28.

When the answering apparatus CPU 42 receives a communication on line 44 with a DN and a "not answered" or "busy" indication, it prompts the DSP 38 to cause port 46 to go off-hook in order to complete a call path from the calling telephone 24 to the answering system 36 and it accesses data store 40 to retrieve a voice messaging greeting which it causes the DSP to play over port 46. Where a CPND has been received, this greeting may be personalised; the greeting may also be different for the case where the called telephone went unanswered and the case where the called telephone was busy.

While the greeting is playing, the DSP 38 monitors line 34 for a facsimile calling tone. If one is received, the DSP stops play of the greeting and initiates handling of the call as a fax call. If (based on a prior user input) the CPU 42 has configured the DSP 38 for facsimile call answering, then the DSP, on receiving a facsimile calling tone, negotiates a facsimile protocol over line 34 then receives a facsimile message which is passed to CPU 42 for storage in data store 40. If the CPU 42 has configured the DSP for facsimile call transfer, then the DSP, on receiving a facsimile calling tone, signals the CPU 42 causing the CPU to access data store 40 for a facsimile machine DN associated with telephone 28, say the DN for facsimile machine 32. The CPU 42 then passes this facsimile machine DN to CPU 14 of the PBX. This causes the PBX CPU 14 to disconnect the answering system from the call path and bridge the call on the line card terminating line 20 with the line card terminating line 30 so that a call path is completed to facsimile machine 32.

If no facsimile calling tone is received, the DSP completes the greeting and passes subsequently received voice signals to the CPU 42 for storage in data store 40 as voice mail. However, the DSP continues to monitor for a facsimile calling tone and if at any time during voice mail handling a facsimile calling tone is received, the DSP initiates handling of the call as a fax call. In this way, a caller may leave both a voice message and a facsimile in the same call.

Where the PBX bridges the line card terminating line 20 with the line card terminating line 26 and the local telephone 28 answers the call, the PBX CPU 14 sends the DN of the line card for telephone 28 to the answering apparatus 36 over line 44 along with a "call answered" indication. At the same time, the CPU 14 bridges the line card terminating line 34 to the line card terminating line 20 in order to conference in the answering system 36 to the call between telephones 24 and 28. When the CPU 42 of the answering system receives the DN and "call answered" indication, it prompts the DSP 38 to cause port 46 to go off-hook in order to complete the three-way call path amongst the calling telephone 24, the called telephone 28, and the answering system 36. In this instance, the CPU may send a "greeting on fax" message to the DSP which is stored by the DSP for possible future use. Once connected to the call path, the DSP 38 plays no greeting but monitors line 34 for a facsimile calling tone. If one is received, and the DSP has in storage a "greeting on fax" message, then it plays this message over port 46. The message may simply be the words "fax call" which alerts the user of telephone 28 as to what is about to happen. The DSP then initiates facsimile call answering or facsimile call transfer, as aforedescribed, and, as well, sends a "fax call" indicator to the CPU 42. This causes the CPU 42 to pass the DN for the line card of telephone 28 to CPU 14 of the PBX along with a "fax call" indicator. Based on this message, the PBX tears down the connection between the line card terminating line 26 and the line card terminating line 20. If the CPU 42 does not receive a "fax call" indicator from the DSP 38 within a configurable time, it then prompts the DSP to go on-hook and sends a message to the PBX with the DN and a "no fax call" indicator which causes the PBX to tear down the connection between the line card terminating line 34 and the line card terminating line 20 thereby freeing the answering apparatus 36 for other tasks. This configurable period may be as short as a single fax-tone repeat cycle (a few seconds) or as long as several minutes to allow for callers to have a discussion with the called party prior to starting transmission of a facsimile.

From the foregoing, it will be obvious that the answering system 36 may be used by the PBX to service any of the local telephones connected to the PBX. Further, typically, the voice answering system will have a number of lines 34 and a corresponding number of DSPs or DSP channels so that the answering apparatus 36 could handle a number of calls serviced by the PBX simultaneously.

If the PBX is not equipped with direct-inward-dialling, then a caller will dial a DN representing the PBX generally rather than any particular telephone associated with the PBX. In this case, the PBX is provided with a human or automated attendant which answers each call and then receives exchange information from the caller rather than from data store 16. Once the CPU 14 has knowledge of the line card represented by this exchange information, processing of the call proceeds as aforedescribed.

While the PBX is shown as having a separate communication line 44 to the answering apparatus 36, as an alternative, messages between the PBX CPU 14 and answering apparatus CPU 42 may be exchanged via line 34.
DSP 38 may be replaced with a voice/fax port which is a "dumb" relay that goes on or off-hook or on-hook on instructions from CPU 42. In this case, all processing functions which had been provided by the processor 48 of the DSP are centralised in CPU 42.

While the described system includes a PBX, the PBX could be replaced by another telephone switch such as a central office (CO) switch or a key system.

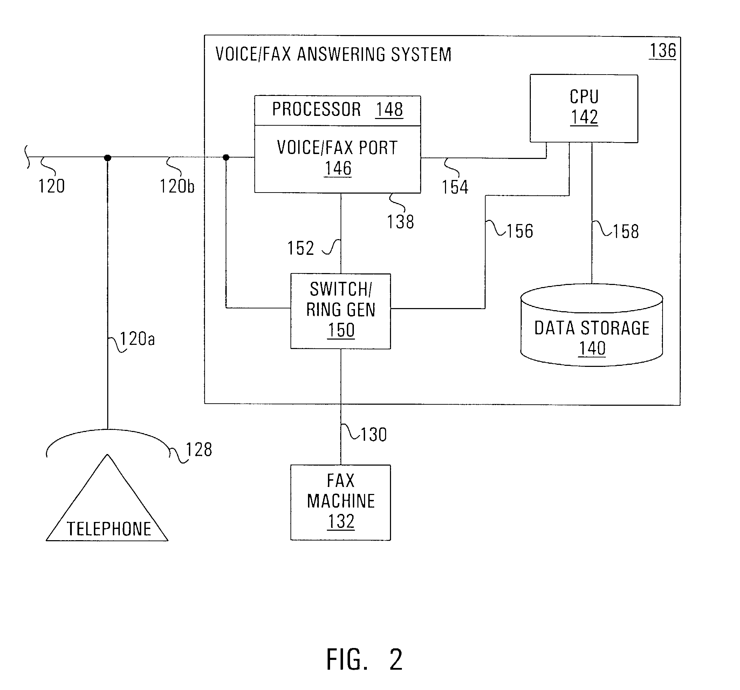

Figure 2 illustrates a single-line embodiment of this invention. Turning to figure 2, a system for handling both voice and facsimile calls comprises a line 120 incoming from a remote switch, such as a CO switch. Line 120 divides into line 120a which is terminated by telephone 128 and line 120b which is terminated by voce/fax answering apparatus 136.

The answering apparatus 136 comprises a DSP 138 and a switch/ring generator 150 which both terminate line 120b. The switch of the switch/ring generator is normally open. The DSP 138 is connected on a control line 152 to the switch/ring generator and on control line 154 to a CPU 142 for the answering apparatus. The CPU also has a control line 156 to the switch/ring generator and a communication line 158 to a data store 140. The switch/ring generator terminates line 130 to a fax machine 132. The DSP 138 comprises a processor 148 and a voice/fax port 146.

Whenever a call arrives on line 120, it will reach both telephone 128 and answering apparatus 136. A ringing voltage on line 120 will be sensed by DSP 138; if the telephone rings unanswered for a configurable time, the processor 148 of the DSP causes the voice/fax port to go off-hook and signals the CPU 142 with a "not answered "indication on line 152 (as well as with any received CPND or CLID). The CPU responds by accessing the data store 140 for an appropriate greeting which (may be personalised by a CPND and) is passed back to the DSP to be played on the line 120. Upon going off-hook, the DSP monitors for a facsimile calling tone. If one is received while the greeting is playing, the DSP stops play of the greeting and initiates handling of the call as a fax call. If (based on a prior user input) the CPU 142 has configured the DSP 138 for facsimile call answering, then the DSP, on receiving a facsimile calling tone, negotiates a facsimile protocol over line 120 then receives a facsimile message which is passed to CPU 142 for storage in data store 140. If the CPU 142 has configured the DSP for facsimile call transfer, then the DSP, on receiving a facsimile calling tone, signals the CPU 142 causing the CPU to signal switch/ring generator 150 on line 156 so that the generator generates a ring signal on line 130 which results in the fax machine 132 going off-hook. Once the fax machine 132 goes off-hook, the switch of the switch/ring generator 150 closes so that the fax machine is connected to line 120 and will respond to facsimile calling tones on line 120 in order to negotiate a facsimile protocol and receive a facsimile message.

If no facsimile calling tone is received, the DSP completes the greeting and passes subsequently received voice signals to the CPU 142 for storage in data store 140 as voice mail. However, the DSP continues to monitor for a facsimile calling tone and if at any time during voice mail handling a facsimile calling tone is received, the DSP initiates handling of the call as a fax call.

Where telephone 128 answers the call, the DSP 138 senses the DC line voltage on line 120 resulting from the telephone 128 going off-hook. This causes the DSP to transition its port to an off-hook state so that the answering system 136 is conferenced into the call and sends a "call answered" indication to the CPU 142.

When the CPU 142 of the answering system receives the "call answered" indication, it may send a "greeting on fax" message to the DSP which is stored by the DSP for possible future use. Once connected to the call path, the DSP 138 monitors line 120 for a facsimile calling tone. If one is received, and the DSP has in storage a "greeting on fax" message, then it plays this message over port 146. The DSP then initiates handling of the call as a fax call as aforedescribed. The DSP monitors the line for a fax call for the duration of a call on line 120 only returning to an on-hook state after the telephone 128 goes on-hook.

Obviously, if a caller finds line 120 busy, then the call never reaches line 120 and no action is taken by the system in respect of the call.

Answering apparatus 136 may be adapted to handle multiple DNs associated with line 120 which each result in a distinctive ring on line 120. In the case of distinctive rings, the DSP 138 may pass the ring cadence to the CPU 142 along with a "not answered" indication if the call is not answered by the telephone 128 so that the CPU may send a greeting relating to the appropriate called party represented by the DN. This information will also be used by the CPU 142 to ensure a subsequent voice (or fax) mail message is stored in an appropriate mailbox of data store 140.

To allow outgoing calls from fax machine 132, the switch of switch/ring generator 150 closes on sensing an impedance change on line 130 indicative of the fax machine going off-hook.

If the answering apparatus is only to store facsimile calls in its data store, then the switch/ring generator 150 (and the fax machine 132) may be eliminated. As with the first embodiment, DSP 38 may be replaced with a voice/fax port which is a "dumb" relay in which case all processing functions which had been provided by the processor 148 of the DSP are centralised in CPU 142.

Both described embodiments may be modified to handle non-voice calls in addition to, or in place of, facsimile calls, such as TTY communications for the deaf. A calling TTY terminal (also known a telecommunication device for the deaf, or TDD) generates frequency shift keying (FSK) signals which are, therefore, recognisable in the same way as a facsimile calling tone is recognisable. Thus, if the answering apparatus 36, 136 is programmed to recognize TTY signals, then, during a call, if TTY signals are received, the call may be transferred to a TTY device (rather than a facsimile machine) or the answering apparatus may initiate a TTY call answering session, storing any resulting message in the data store 40, 140, depending upon how the answering apparatus 36, 136 is configured to handle such calls. When the DSP 38, 138 recognises a TTY signal, it may generate a TTY signal on the call path, such as "wait", which indicates to the calling party that the call is being handled.

Other modifications will be apparent to those skilled in the art and, accordingly, the invention is defined in the claims.

## Claims

1. A method for handling both voice and non-voice calls on a call path, comprising the steps of:
sensing whether or not a telephone associated with said call path has completed a call on said call path;
when sensing that said call has not been completed by said associated telephone,
(i) completing said call and initiating the playing of a greeting on said call path;
(ii) monitoring said call path for a non-voice indicator signal;
(iii) on sensing a non-voice indicator signal, initiating handling of said call as a non-voice call and, if said greeting is playing, initiating cessation of said greeting;
(iv) on failing to sense said non-voice indictor signal before the end of said greeting, initiating voice mail handling of said call until any said non-voice indicator signal is received;
when sensing that said call on said call path has been completed by said associated telephone,
(i) monitoring said call path for anon-voice indicator signal; and
(ii) on sensing a non-voice indicator signal, initiating the handling of said call on said call path as a non-voice call.

2. The method of claim 1 including the step of, when sensing that said call on said call path has been completed by said associated telephone, on failing to sense said non-voice indictor signal after a pre-selected time interval, ceasing to monitor said call path for a non-voice indicator signal.

3. The method of any one of claims 1-2 wherein said step of sensing that said call on said call path has not been completed by said associated telephone comprises sensing a preselected number of ringing signals on said call path.

4. The method of any one of claims 1-3 including the step of, on sensing a non-voice indicator signal, disconnecting said associated telephone from said call path.

5. The method of any one of claims 1-4 wherein said non-voice indicator signal is a facsimile transmission signal and wherein said step of handling of said call as a non-voice call comprises one of redirecting said call to a facsimile machine and storing signals on said call path in a facsimile data store.

6. The method of any one of claims 1-4 wherein said non-voice indicator signal comprises TTY transmission signals and wherein said step of handling of said call as a non-voice call comprises one of redirecting said call to a TTY device and storing signals on said call path in a TTY data store.

7. The method of any one of claims 1-6 wherein the step of initiating voice mail handling of said call comprises directing signals on said call path to a voice mail data store.

8. A method for handling both voice and non-voice calls on a call path, comprising the steps of:
receiving an indication whether or not a telephone associated with said call path has completed a call on said call path;
when receiving an indication that said call has not been completed by said associated telephone,
(i) completing said call and initiating the playing of a greeting on said call path;
(ii) monitoring said call path for a non-voice indicator signal;
(iii) on sensing a non-voice indicator signal, initiating handling of said call as a non-voice call and, if said greeting is playing, initiating cessation of said greeting;
(iv) on failing to sense said non-voice indictor signal before the end of said greeting, initiating voice mail handling of said call until any said non-voice indicator signal is received;
when receiving an indication that said call on said call path has been completed by said associated telephone,
(i) monitoring said call path for a non-voice indicator signal; and
(ii) on sensing a non-voice indicator signal, initiating the handling of said call on said call path as a non-voice call.

9. A voice and non-voice answering apparatus for a call path, comprising:
a port for association with said call path and having an on-hook state and an off-hook state;
processing means for receiving an indication a call on said call path has not been completed by a telephone associated with said call path within a pre-determined time and thereafter:
(i) transitioning said port to said off-hook state;
(ii) initiating the playing of a greeting over said port;
(iii) monitoring for a non-voice indicator signal received by said port on said call path;
(iv) on sensing a non-voice indicator signal, initiating handling of a call on said call path as a non-voice call, and, if said greeting is playing, initiating cessation of said greeting;
(v) on failing to sense said non-voice indictor signal before the end of said greeting, initiating voice mail handling of said call until any said non-voice indicator signal is received;
and for receiving an indication said call on said call path has been completed by said associated telephone and thereafter:
(i) transitioning said port to said off-hook state;
(ii) monitoring for a non-voice indicator signal received by said port; and
(iii) on sensing a non-voice indicator signal, initiating the handling of said call on said call path as a non-voice call.

10. The answering apparatus of claim 9 wherein said indication a call on said call path has not be completed by said telephone associated with said call path within a pre-determined time comprises a pre-determined number of ringing signals on said call path sensed by said processing means.

11. The answering apparatus of any one of claims 9-10 wherein said indication a call on said call path has been completed by said telephone associated with said call path comprises a DC line voltage on said call path.

12. The answering apparatus of any one of claims 9-11 wherein said processing means has an input line for connection to a local switching system, said processing means for receiving a non-completion signal on said line indicating a call on said call path has not be completed within a pre-determined time.

13. The answering apparatus of any one of claims 9-12 wherein said processing means is for receiving a completion signal on said input line indicating a call on said call path has been completed.

14. The answering apparatus of any one of claims 9-13 including a data store associated with said processing means for storing voice-mail.

15. The answering apparatus of any one of claims 9-14 including a ring generator associated with said processing means, said processing means for initiating handling of said call as a non-voice call by instructing said ring generator to cause a connected facsimile machine to go off-hook.

16. A telephone switching system comprising:
a plurality of line cards;
a switch processor for selectively bridging line cards to establish a call path, for sensing on said call path, and for signalling;
a port connected to one of said line cards and having an on-hook state and an off-hook state;
an answering system processing means for receiving an indication from said switch processor a call on a call path has not been completed by a telephone associated with said call path within a pre-determined time and thereafter:
(i) transitioning said port to said off-hook state;
(ii) initiating the playing of a greeting over said port;
(iii) monitoring for a non-voice indicator signal received by said port on said call path;
(iv) on sensing a non-voice indicator signal, initiating handling of a call on said call path as a non-voice call, and, if said greeting is playing, initiating cessation of said greeting;
(v) on failing to sense said non-voice indictor signal before the end of said greeting, initiating voice mail handling of said call until any said non-voice indicator signal is received;
and for receiving an indication from said switch processor said call on said call path has been completed by said associated telephone and thereafter:
(i) transitioning said port to said off-hook state;
(ii) monitoring for a non-voice indicator signal received by said port; and
(iii) on sensing a non-voice indicator signal, initiating the handling of said call on said call path as a non-voice call.
